# FASCICULE DE BREVET EUROPEEN

(11) **EP 3 152 100 B1**
(45) Date de publication et mention de la délivrance du brevet: **04.07.2018**
(21) Numéro de dépôt: 15727704.7
(22) Date de dépôt: 27.05.2015
(51) Int. Cl.: B62D 43/04, B62D 65/16

(54) **ENSEMBLE DE RETENUE DE ROUE DE SECOURS EN SOUS CAISSE, VÉHICULE MUNI D'UN TEL ENSEMBLE, PROCÉDÉ DE RÉALISATION D'UN TEL ENSEMBLE ET PROCÉDÉ DE MONTAGE SUR VÉHICULE D'UN TEL ENSEMBLE**
ANORDNUNG ZUM HALTEN EINES RESERVEREIFENS IN EINEM UNTERBODEN, KRAFTFAHRZEUG MIT SOLCH EINER ANORDNUNG, VERFAHREN ZUR HERSTELLUNG DERSELBEN UND VERFAHREN ZUR MONTAGE EINER DERARTIGEN ANORDNUNG AN EINEM FAHRZEUG
ASSEMBLY FOR HOLDING A SPARE WHEEL IN AN UNDERBODY, VEHICLE PROVIDED WITH SUCH AN ASSEMBLY, METHOD FOR PRODUCING SUCH AN ASSEMBLY AND METHOD FOR MOUNTING SUCH AN ASSEMBLY ON A VEHICLE

(30) Priorité: 06.06.2014 FR 1455176
(43) Date de publication de la demande: 12.04.2017
(73) Titulaire: Renault s.a.s, 92100 Boulogne-Billancourt (FR)
(72) Inventeur: DELAUNAY, Guillaume, 28500 Vernouillet (FR)
(86) Numéro de dépôt international: PCT/FR2015/051401
(87) Numéro de publication internationale: WO 2015/185826

(56) Documents cités:
- EP-A1- 1 190 940
- FR-A1- 2 723 715

## Description

La présente invention concerne le domaine automobile, plus particulièrement un dispositif de retenue de roue de secours en sous caisse, ainsi qu'un véhicule muni d'un tel dispositif.
Une roue de secours d'un véhicule est en général maintenue sous le plancher du véhicule au moyen d'un support lui-même suspendu sous le châssis ou la caisse du véhicule. Un tel support est manoeuvrable de manière à libérer la roue de secours lorsque celle-ci doit être utilisée. Des exemples de tels supports sont par exemple décrits dans FR 2 723 715.
Les supports de roue de secours disposés en sous face des caisses de véhicule automobile sont soumis à des conditions de fonctionnement difficiles. Les supports, par exemple en condition de roulage, sont sujets à de fortes vibrations, chocs, projections, conditions corrosives, etc.
Les vibrations ou chocs peuvent notamment entrainer une rupture du support, ou une rupture de liaison entre un tel support et le reste du véhicule automobile. Or, une rupture du support présente un risque élevé pour la sécurité des occupants. Lorsque de tels incidents surviennent pour un véhicule en roulage, les conséquences sur la sécurité des passagers du véhicule et des autres usagers de la route peuvent être sérieuses.

L'invention vient remédier aux inconvénients précités.

Ce but est atteint grâce à l'invention qui propose un ensemble de retenue d'une roue de secours d'un véhicule automobile destiné à être solidarisé à une partie extérieure de soubassement de caisse du véhicule automobile, l'ensemble comprenant un panier muni d'au moins trois fixations supérieures distinctes aptes à être solidarisées au véhicule, lesdites fixations étant disposées en périphérie de panier, à l'intérieur duquel est positionné une roue de secours, ledit panier comprenant une partie fixe et une partie mobile pivotante autour d'un axe charnière porté par la partie fixe du panier, ladite partie fixe comprenant au moins deux fixations supérieures alignées sensiblement suivant une direction parallèle à l'axe charnière, ladite partie mobile comprenant au moins une fixation supérieure, ledit ensemble étant caractérisé en ce qu'il comprend un segment disposé au contact et au-dessus de la roue, ledit segment étant destiné à réaliser un maintien supplémentaire de roue et en ce que ledit segment est relié au panier par des extrémités disposées au contact et au-dessus des fixations supérieures de la partie fixe du panier.

Grâce au segment de maintien de roue, la stabilité et le calage de la roue est amélioré. L'amélioration du calage et de la stabilité entraine une réduction des vibrations, ce qui diminue le risque de défaillances ou de casses. La sécurité des passagers est ainsi améliorée.

Dans des formes de réalisation préférées de l'invention, on a en outre recours à l'une et/ou à l'autre des dispositions suivantes prises seules ou en combinaison:
- Le segment comprend des extrémités en forme de plaque, chaque plaque étant munie d'une ouverture destinée au passage d'une vis de fixation.
- Le segment comprend au moins un fil dont les embouts sont fixés sur les plaques extrémités.
- Le fil comprend un tronçon central rectiligne sensiblement parallèle à l'axe charnière, encadrés par deux tronçons latéraux obliques, lesdits tronçons latéraux obliques étant fixés sur les plaques extrémités.
- Le segment comprend deux fils disposés cote à cote.
- Le panier comprend quatre fixations supérieures : deux fixations supérieures sur la partie fixe et deux fixations supérieures sur la partie mobile.

L'invention concerne aussi un véhicule muni d'une partie extérieure de soubassement, ledit véhicule comprenant un ensemble de retenue d'une roue de secours d'un véhicule automobile dont les plaques extrémités du segment sont disposées entre la partie extérieure du soubassement et les fixations supérieures de la partie fixe du panier.

De plus, l'invention concerne aussi un procédé de réalisation d'un ensemble de retenue d'une roue de secours d'un véhicule automobile comprenant les étapes suivantes :
a) Fourniture d'un panier de roue de secours présentant une partie fixe avec des fixations supérieures, d'une roue de secours, d'un segment de roue de secours présentant des plaques extrémités.
b) Positionnement de la roue à l'intérieur du panier de roue de secours.
c) Positionnement du segment sur la roue et le panier, avec superposition des plaques extrémités du segment à des fixations supérieures du panier.

De même, l'invention concerne aussi un procédé de montage d'un ensemble de retenue d'une roue de secours d'un véhicule automobile sur un véhicule automobile comprenant les étapes suivantes :
a) Fourniture d'un ensemble de retenue de roue de secours comprenant un panier muni de fixations supérieures, le panier comprenant une partie fixe dont les fixations supérieures sont recouvertes par les plaques extrémités d'un segment couvrant la roue, et fourniture d'un véhicule comprenant une partie extérieure de soubassement.
b) Vissage des fixations supérieures du panier à la partie extérieure de soubassement de véhicule au moyen de vis traversant les fixations supérieures du panier, les vis traversant les fixations supérieures de la partie fixe du panier traversant également les plaques extrémités du segment.

D'autres caractéristiques et avantages de l'invention apparaîtront au cours de la description suivante de plusieurs de ses formes de réalisation, données à titre d'exemples non limitatifs, en regard des dessins joints. Sur les dessins :
La figure 1 est une vue du segment de roue.
La figure 2 est une vue d'un ensemble de retenue de roue de secours selon l'invention.
La figure 3 est une vue d'un ensemble de retenue de roue de secours en position de montage sur un soubassement de véhicule.
La figure 4 est une vue en coupe partielle agrandie suivant la ligne l - l de la figure 3.

Dans le contexte de la présente demande, les termes « avant », « arrière », « gauche », « droite », « inférieur », « supérieur » s'entendent en référence à un repère usuel des véhicules automobiles comprenant un premier axe longitudinal X, horizontal et orienté de l'arrière vers l'avant, un axe transversal Y et un axe vertical Z dirigé du bas vers le haut.

Par ailleurs, sur les différentes figures, les mêmes références désignent des éléments identiques ou similaires.

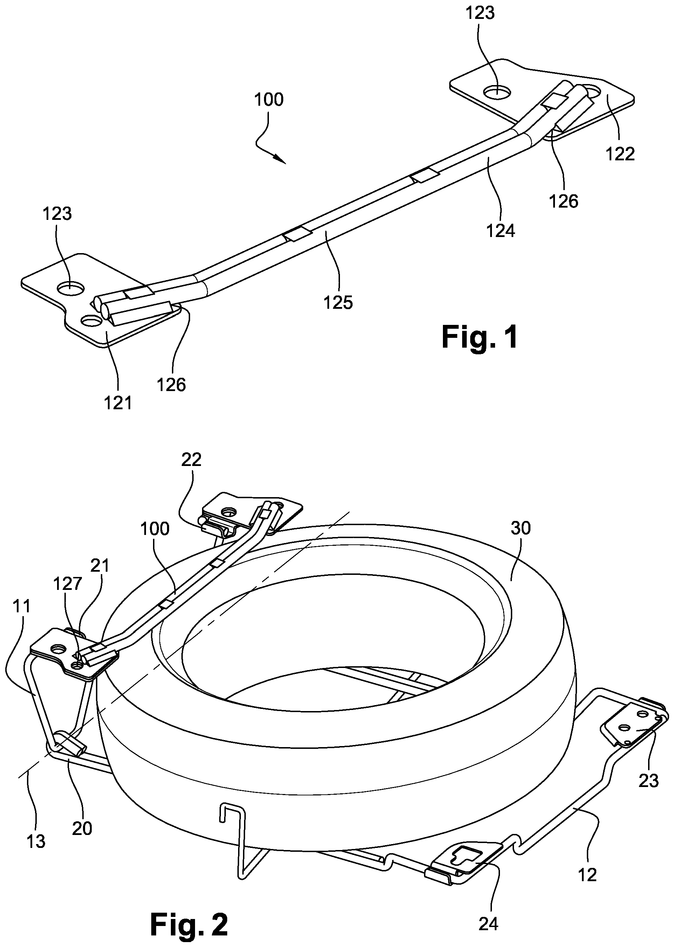

La figure 1 est une vue d'un segment de roue 100 destiné à être placé sur un panier de roue de secours équipé d'une roue, tel que représenté en figure 2. Le segment 100 de roue comprend deux plaques de fixation formant extrémités 121, 122 reliées par au moins un fil 124. Dans le mode de réalisation décrit, le fil comprend un tronçon central 125 rectiligne, encadré par deux tronçons latéraux obliques 126 fixés sur les plaques extrémités 121, 122. La fixation est réalisée par soudage. Les tronçons latéraux obliques 126 forment embout de la partie filaire du segment. Par tronçons obliques, on entend des tronçons inclinés d'environ 45° par rapport au tronçon central. Les différents tronçons de fil sont situés dans un même plan horizontal, et le fil peut être d'une seule pièce, réalisé par exemple par cintrage. Chaque plaque extrémité 121, 122 est munie d'une ouverture 123 destinée au passage d'une vis de fixation, la vis de fixation réalisant l'accrochage de l'ensemble de retenue de roue au soubassement du véhicule.

La figure 2 montre ensemble 10 de retenue de roue de secours comprenant un panier 20 de roue de secours équipé de la roue de secours et du segment de roue de secours. Comme visible sur la figure 2, le panier 20 comprend au moins trois fixations supérieures distinctes, ici exactement quatre fixations, deux fixations situées à l'avant du panier 21, 22 et deux fixations situées à l'arrière du panier 23, 24, ces fixations comprennent une surface plane qui se solidarise par vissage ou soudage à la partie extérieure du soubassement de caisse du véhicule. Les fixations sont sensiblement situées en périphérie de panier, notamment sur les parties arrière et avant de panier.

Le panier 20 comprend une partie fixe 11 située à l'avant du panier et une partie mobile en pivotement 12 verrouillable par une ou deux fixations à l'arrière. Ces dernières fixations comportent généralement un crochet, de manière à pouvoir être aisément déconnectées lors de l'utilisation de la roue de secours.

En effet, la partie mobile 12 est pivotante autour d'un axe charnière 13 porté par la partie fixe 11 du panier, cet axe charnière est sensiblement transversal. Une fois le panier fixé au véhicule, la partie mobile pivote et est utilisée, entre une position haute d'arrimage au véhicule et une position basse permettant le désengagement de la roue de son logement, et donc son utilisation.

Les fixations supérieures 21, 22 de la partie fixe du panier sont sensiblement alignées suivant une direction parallèle à l'axe charnière, sensiblement suivant un axe transversal.

Le segment 100 est relié au panier 20 par ses extrémités 121, 122 disposées au contact et au-dessus des fixations supérieures 21, 22 de la partie fixe du panier. Le tronçon central 125 du segment 100 appartient à un plan vertical qui partage la roue en deux parties de roue. Le tronçon central 125 est rectiligne et sensiblement parallèle à l'axe charnière 13

Par son contact avec la roue, le segment 100 procure un maintien supplémentaire de roue, qui présente l'avantage d'améliorer la fixation de la roue 30 dans son logement, et notamment permet de prévenir et d'éviter toute vibration de la roue et des éléments environnant, susceptibles à terme de créer une détérioration avec des conséquences sur la sécurité des occupants.

Le tronçon central 125 est en contact avec la roue, plus exactement avec le pneu, à l'endroit ou le galbe de la roue est le plus épais. L'effet de retenue réalisé par le fil sur la roue est ainsi maximalisé grâce à ce contact.

Dans un mode de réalisation particulier, le segment 100 comprend deux fils 124 semblables disposés côte à côte dans un plan horizontal. Le doublement du fil permet d'optimiser la retenue et le contact sur la roue, en garantissant que le contact se réalise en permanence, malgré les mouvements de variation de positionnement inévitable de la roue en cours de roulage.

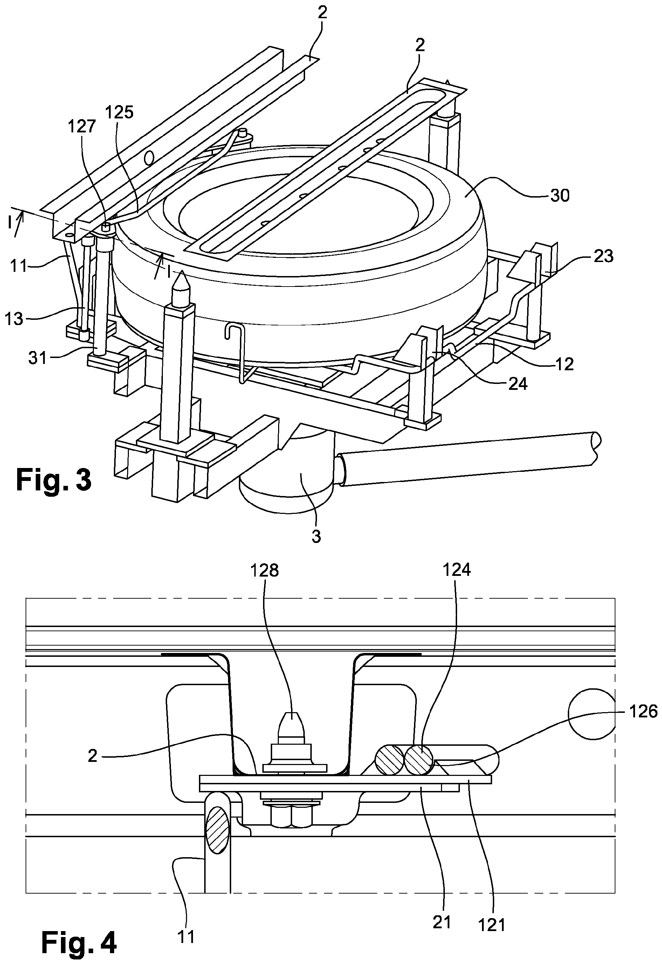

La figure 3 illustre le montage de l'ensemble de retenue de roue de secours sur un véhicule automobile dans une usine de montage de véhicules.

L'ensemble de retenue est réalisé de la façon suivante :
On procède tout d'abord à la fourniture d'un panier de roue de secours 20, d'une roue de secours 30, d'un segment de roue de secours 100. Puis, on place le panier 20 de roue de secours sur un dispositif d'assistance au montage 3 tel que visible en figure 3. On positionne ensuite la roue de secours 30 à l'intérieur du panier 20 de roue de secours. Enfin, on place le segment 100 sur la roue 30 et le panier 20 en superposant les plaques extrémités 121, 122 du segment 100 aux fixations supérieures 21, 22 de la partie fixe 11 du panier, de façon à ce que les ouvertures 123 situées à l'intérieur des fixations supérieures 21, 22 de la partie fixe du panier soient exactement face aux ouvertures réalisées dans les plaques extrémités 121, 122 du segment. Il existe deux types d'ouvertures superposées à la fois présentes sur les plaques extrémités du segment et sur les plaques supérieures de fixation du panier: les ouvertures 123 destinées au passage de la vis de fixation et les ouvertures pilotes 127 permettant le positionnement sur le moyen d'assemblage. Comme visible en figure 3, les ouvertures pilotes 127 sont engagées sur un plot 31 du dispositif d'assistance au montage.

Le montage de l'ensemble de retenue de roue de secours au soubassement de véhicule fourni est réalisé ensuite par un déplacement vertical vers le haut, en direction du soubassement, de l'ensemble positionné sur le dispositif d'assemblage, puis par vissage des fixations supérieures du panier 21, 22 23 24 à la partie extérieure de soubassement 2 de véhicule au moyen de vis 128 traversant les fixations supérieures 21, 22, 23, 24 du panier, les vis traversant les fixations supérieures de la partie fixe du panier traversant également les extrémités 121, 122 du segment 100.

La figure 4 est une vue en coupe partielle agrandie suivant la ligne l - l de la figure 3. Sur la figure, on peut voir que la vis 128 relie la fixation supérieure 21 de la partie fixe 11 du panier à une traverse du soubassement 2 de véhicule. Entre la fixation supérieure du panier et la traverse du soubassement est positionnée l'extrémité 121 du segment 100. Comme visible sur la figure, la vis 128 traverse à la fois la fixation supérieure 21 de la partie fixe 11 du panier, la plaque extrémité 121 du segment 100 et la traverse du soubassement. Comme visible sur la figure 4, les tronçons obliques 126 du fil 124 sont liés par soudure à la plaque extrémité 121. La portion rectiligne du fil n'est pas visible sur cette figure.

Le segment de roue permet d'assurer un maintien supplémentaire de la roue dans son panier, le mode de montage et de fixation de celui-ci, directement sur véhicule est remarquable et permet un calage amélioré de la roue dans son logement. De plus, il est à noter que le mode de fixation du fil fixé à la traverse de soubassement permet un appui solide à la roue sur celui-ci lors de son réengagement dans son logement après utilisation, le fil du segment ne forme ainsi pas obstacle au réengagement de la roue, tout en améliorant le calage en roulage.

L'invention n'est nullement limitée au mode de réalisation décrit.

## Revendications

1. Ensemble (10) de retenue d'une roue de secours d'un véhicule automobile destiné à être solidarisé à une partie extérieure de soubassement de caisse du véhicule automobile comprenant un panier (20) muni d'au moins trois fixations supérieures distinctes (21, 22, 23, 24) aptes à être solidarisées au véhicule, lesdites fixations (21, 22, 23, 24) étant disposées en périphérie de panier (20), à l'intérieur duquel est positionné une roue de secours (30), ledit panier (20) comprenant une partie fixe (11) et une partie mobile (12) pivotante autour d'un axe charnière (13) porté par la partie fixe (11) du panier,
Ladite partie fixe (11) comprenant au moins deux fixations supérieures (21, 22) alignées sensiblement suivant une direction parallèle à l'axe charnière,
Ladite partie mobile (12) comprenant au moins une fixation supérieure (23, 24),
Ledit ensemble étant **caractérisé en ce qu'**il comprend un segment (100) disposé au contact et au-dessus de la roue (30), ledit segment (100) étant destiné à réaliser un maintien supplémentaire de roue et **en ce que** ledit segment (100) est relié au panier (20) par des extrémités (121, 122) disposées au contact et au-dessus des fixations supérieures (21, 22) de la partie fixe du panier.

2. Ensemble (10) de retenue d'une roue de secours d'un véhicule automobile selon la revendication précédente **caractérisé en ce que** le segment (100) comprend des extrémités (121, 122) en forme de plaque, chaque plaque (121, 122) étant munie d'une ouverture (123) destinée au passage d'une vis de fixation.

3. Ensemble (10) de retenue d'une roue de secours d'un véhicule automobile selon la revendication précédente **caractérisé en ce que** le segment (100) comprend au moins un fil (124) dont les embouts sont fixés sur les plaques extrémités (121, 122),

4. Ensemble (10) de retenue d'une roue de secours d'un véhicule automobile selon la revendication précédente **caractérisé en ce que** le fil (124) comprend un tronçon central (125) rectiligne sensiblement parallèle à l'axe charnière (13), encadrés par deux tronçons latéraux obliques 126, lesdits tronçons latéraux obliques (126) étant fixés sur les plaques extrémités (121, 122).

5. Ensemble (10) de retenue d'une roue de secours d'un véhicule automobile selon l'une quelconque des revendications 3 à 4 **caractérisé en ce que** le segment (100) comprend deux fils (124) disposés cote à cote.

6. Ensemble (10) de retenue d'une roue de secours d'un véhicule automobile selon l'une quelconque des revendications précédentes **caractérisé en ce que** le panier 20 comprend quatre fixations supérieures : deux fixations supérieures (121, 122) sur la partie fixe (11) et deux fixations supérieures (123, 124) sur la partie mobile (12).

7. Véhicule muni d'une partie extérieure de soubassement (2), ledit véhicule comprenant un ensemble (10) de retenue d'une roue de secours d'un véhicule automobile selon l'une quelconque des revendications 3 à 5 **caractérisé en ce que** les plaques (121, 122) extrémités du segment (100) sont disposées entre la partie extérieure du soubassement (2) et les fixations supérieures (21, 22) de la partie fixe (11) du panier.

8. Procédé de réalisation d'un ensemble de retenue (10) d'une roue de secours d'un véhicule automobile comprenant les étapes suivantes :
a. Fourniture d'un panier de roue de secours (20) présentant une partie fixe (11) avec des fixations supérieures (21, 22), d'une roue de secours (30), d'un segment de roue de secours (100) présentant des plaques extrémités (121, 122).
b. Positionnement de la roue (30) à l'intérieur du panier (20) de roue de secours.
c. Positionnement du segment (100) sur la roue (30) et le panier (20), avec superposition des plaques extrémités du segment (121, 122) aux fixations supérieures (21, 22) de la partie fixe du panier.

9. Procédé de montage d'un ensemble de retenue (10) d'une roue de secours d'un véhicule automobile sur un véhicule automobile comprenant les étapes suivantes :
a. Fourniture d'un ensemble (10) de retenue de roue de secours comprenant un panier (20) muni de fixations supérieures (21, 22, 23, 24), le panier comprenant une partie fixe (11) dont les fixations supérieures (21, 22) sont recouvertes par les plaques extrémités d'un segment (100) couvrant la roue, et fourniture d'un véhicule comprenant une partie extérieure de soubassement (2).
b. Vissage des fixations supérieures du panier (21, 22, 23, 24) à la partie extérieure de soubassement de véhicule au moyen de vis (128) traversant les fixations supérieures (21, 22, 23, 24) du panier, les vis traversant les fixations supérieures de la partie fixe (11) du panier traversant également les plaques extrémités (121, 122) du segment (100).

## Patentansprüche

1. Einheit (10) zum Halt eines Reserverads eines Kraftfahrzeugs, die dazu bestimmt ist, fest mit einem äußeren Teil eines Karosserie-Unterbodens des Kraftfahrzeugs verbunden zu werden, die einen Korb (20) enthält, der mit mindestens drei unterschiedlichen oberen Halterungen (21, 22, 23, 24) versehen ist, die fest mit dem Fahrzeug verbunden werden können, wobei die Halterungen (21, 22, 23, 24) am Korbumfang (20) angeordnet sind, innerhalb dessen ein Reserverad (30) positioniert ist, wobei der Korb (20) einen ortsfesten Teil (11) und einen beweglichen Teil (12) enthält, der um einen Scharnierstift (13) schwenkt, der vom ortsfesten Teil (11) des Korbs getragen wird,
wobei der ortsfeste Teil (11) mindestens zwei obere Halterungen (21, 22) enthält, die im Wesentlichen gemäß einer Richtung parallel zum Scharnierstift ausgerichtet sind,
wobei der bewegliche Teil (12) mindestens eine obere Halterung (23, 24) enthält,
wobei die Einheit **dadurch gekennzeichnet ist, dass** sie ein Segment (100) enthält, das in Kontakt mit dem und oberhalb des Rads (30) angeordnet ist, wobei das Segment (100) dazu bestimmt ist, einen zusätzlichen Radhalt herzustellen, und dass das Segment (100) mit dem Korb (20) durch Enden (121, 122) verbunden ist, die in Kontakt mit und über den oberen Halterungen (21, 22) des ortsfesten Teils des Korbs angeordnet sind.

2. Einheit (10) zum Halt eines Reserverads eines Kraftfahrzeugs nach dem vorhergehenden Anspruch, **dadurch gekennzeichnet, dass** das Segment (100) Enden (121, 122) in Form einer Platte enthält, wobei jede Platte (121, 122) mit einer Öffnung (123) versehen ist, die für den Durchgang einer Befestigungsschraube bestimmt ist.

3. Einheit (10) zum Halt eines Reserverads eines Kraftfahrzeugs nach dem vorhergehenden Anspruch, **dadurch gekennzeichnet, dass** das Segment (100) mindestens einen Draht (124) enthält, dessen Endstücke an den Endplatten (121, 122) befestigt sind.

4. Einheit (10) zum Halt eines Reserverads eines Kraftfahrzeugs nach dem vorhergehenden Anspruch, **dadurch gekennzeichnet, dass** der Draht (124) einen geradlinigen mittleren Abschnitt (125) im Wesentlichen parallel zum Scharnierstift (13) umgeben von zwei schrägen seitlichen Abschnitten (126) enthält, wobei die schrägen seitlichen Abschnitte (126) an den Endplatten (121, 122) befestigt sind.

5. Einheit (10) zum Halt eines Reserverads eines Kraftfahrzeugs nach einem der Ansprüche 3 bis 4, **dadurch gekennzeichnet, dass** das Segment (100) zwei nebeneinander angeordnete Drähte (124) enthält.

6. Einheit (10) zum Halt eines Reserverads eines Kraftfahrzeugs nach einem der vorhergehenden Ansprüche, **dadurch gekennzeichnet, dass** der Korb (20) vier obere Halterungen enthält, zwei obere Halterungen (121, 122) auf dem ortsfesten Teil (11) und zwei obere Halterungen (123, 124) auf dem beweglichen Teil (12).

7. Fahrzeug, das mit einem äußeren Unterbodenteil (2) versehen ist, wobei das Fahrzeug eine Einheit (10) zum Halt eines Reserverads eines Kraftfahrzeugs nach einem der Ansprüche 3 bis 5 enthält, **dadurch gekennzeichnet, dass** die Endplatten (121, 122) des Segments (100) zwischen dem äußeren Unterbodenteil (2) und den oberen Halterungen (21, 22) des ortsfesten Teils (11) des Korbs angeordnet sind.

8. Verfahren zur Herstellung einer Einheit (10) zum Halt eines Reserverads eines Kraftfahrzeugs, das die folgenden Schritte enthält:
a. Bereitstellen eines Reserveradkorbs (20), der einen ortsfesten Teil (11) mit oberen Halterungen (21, 22) aufweist, eines Reserverads (30), eines Reserveradsegments (100), das Endplatten (121, 122) aufweist,
b. Positionieren des Rads (30) im Korb (20) des Reserverads,
c. Positionieren des Segments (100) auf dem Rad (30) und dem Korb (20), mit Auflegen der Endplatten des Segments (121, 122) auf die oberen Halterungen (21, 22) des ortsfesten Teils des Korbs.

9. Verfahren zur Montage einer Halteeinheit (10) eines Reserverads eines Kraftfahrzeugs in ein Kraftfahrzeug, das die folgenden Schritte enthält:
a. Bereitstellen einer Einheit (10) zum Halt eines Reserverads, die einen mit oberen Halterungen (21, 22, 23, 24) versehenen Korb (20) enthält, wobei der Korb einen ortsfesten Teil (11) enthält, dessen obere Halterungen (21, 22) von den Endplatten eines das Rad bedeckenden Segments (100) überdeckt werden, und Bereitstellen eines Fahrzeugs, das einen äußeren Unterbodenteil (2) enthält,
b. Schrauben der oberen Halterungen des Korbs (21, 22, 23, 24) an den äußeren Unterbodenteil des Fahrzeugs mittels Schrauben (128), die die oberen Halterungen (21, 22, 23, 24) des Korbs durchqueren, wobei die die oberen Halterungen des ortsfesten Teils (11) des Korbs durchquerenden Schrauben auch die Endplatten (121, 122) des Segments (100) durchqueren.

## Claims

1. Assembly (10) for retaining a spare wheel of a motor vehicle and intended to be secured to an outer underbody part of the motor vehicle, comprising a basket (20) provided with at least three separate top attachments (21, 22, 23, 24) able to be secured to the vehicle, the said attachments (21, 22, 23, 24) being arranged at the periphery of the basket (20), inside which a spare wheel (30) is positioned, the said basket (20) comprising a fixed part (11) and a movable part (12) pivoting about a hinge axis (13) borne by the fixed part (11) of the basket,
the said fixed part (11) comprising at least two top attachments (21, 22) aligned substantially in a direction parallel to the hinge axis,
the said movable part (12) comprising at least one top attachment (23, 24),
the said assembly being **characterized in that** it comprises a segment (100) arranged in contact with and above the wheel (30), the said segment (100) being intended to produce an additional wheel retention, and **in that** the said segment (100) is connected to the basket (20) by ends (121, 122) arranged in contact with and above the top attachments (21, 22) of the fixed part of the basket.

2. Assembly (10) for retaining a spare wheel of a motor vehicle according to the preceding claim, **characterized in that** the segment (100) comprises ends (121, 122) in the form of a plate, each plate (121, 122) being provided with an opening (123) intended for the passage of a fastening screw.

3. Assembly (10) for retaining a spare wheel of a motor vehicle according to the preceding claim, **characterized in that** the segment (100) comprises at least one wire (124) of which the end pieces are fastened to the end plates (121, 122).

4. Assembly (10) for retaining a spare wheel of a motor vehicle according to the preceding claim, **characterized in that** the wire (124) comprises a rectilinear central portion (125) substantially parallel to the hinge axis (13), framed by two oblique lateral portions (126), the said oblique lateral portions (126) being fastened to the end plates (121, 122).

5. Assembly (10) for retaining a spare wheel of a motor vehicle according to either one of Claims 3 and 4, **characterized in that** the segment (100) comprises two wires (124) arranged side by side.

6. Assembly (10) for retaining a spare wheel of a motor vehicle according to any one of the preceding claims, **characterized in that** the basket (20) comprises four top attachments: two top attachments (121, 122) on the fixed part (11) and two top attachments (123, 124) on the movable part (12) .

7. Vehicle provided with an outer underbody part (2), the said vehicle comprising an assembly (10) for retaining a spare wheel of a motor vehicle according to any one of Claims 3 to 5, **characterized in that** the end plates (121, 122) of the segment (100) are arranged between the outer part of the underbody (2) and the top attachments (21, 22) of the fixed part (11) of the basket.

8. Method for producing an assembly (10) for retaining a spare wheel of a motor vehicle, comprising the following steps:
a. provision of a spare wheel basket (20) having a fixed part (11) with top attachments (21, 22), of a spare wheel (30), and of a spare wheel segment (100) having end plates (121, 122) ;
b. positioning of the wheel (30) inside the spare wheel basket (20);
c. positioning of the segment (100) on the wheel (30) and the basket (20), with superposition of the end plates of the segment (121, 122) on the top attachments (21, 22) of the fixed part of the basket.

9. Method for mounting an assembly (10) for retaining a spare wheel of a motor vehicle on a motor vehicle, comprising the following steps:
a. provision of an assembly (10) for retaining a spare wheel comprising a basket (20) provided with top attachments (21, 22, 23, 24), the basket comprising a fixed part (11) of which the top attachments (21, 22) are covered by the end plates of a segment (100) covering the wheel, and provision of a vehicle comprising an outer underbody part (2);
b. screwing the top attachments of the basket (21, 22, 23, 24) to the outer underbody part of the vehicle by means of screws (128) passing through the top attachments (21, 22, 23, 24) of the basket, the screws passing through the top attachments of the fixed part (11) of the basket also passing through the end plates (121, 122) of the segment (100).
